# EUROPEAN PATENT APPLICATION

(11) **EP 2 921 843 A1**
(43) Date of publication of application: **23.09.2015**
(21) Application number: 12888367.5
(22) Date of filing: 15.11.2012
(51) Int. Cl.: G01N 21/35

(54) **ANALYSIS REGION SETTING DEVICE**

(71) Applicant: Shimadzu Corporation, Kyoto-shi, Kyoto 604-8511 (JP)
(72) Inventor: NODA, Akira, Kyoto-shi, Kyoto 604-8511 (JP); MAEKAWA, Hiroshi, Kyoto-shi, Kyoto 604-8511 (JP)
(74) Representative: Webster, Jeremy Mark
(86) International application number: PCT/JP2012/079617
(87) International publication number: WO 2014/076789

(57) **Abstract**

Provided is a system capable of quickly and accurately setting an analysis target region as intended by a user without requiring cumbersome tasks. The system for setting an analysis target region according to the present invention is a system for setting, within an observed image of a sample, an analysis target region that is a region on which an analysis is to be performed by an analyzer, the system including: a characteristic quantity calculator for dividing the observed image into a plurality of areas and for calculating a predetermined image characteristic quantity in each of the divisional areas; a divisional area selector for allowing a user to select a plurality of the divisional areas; a characteristic quantity range calculator for determining a value range of the image characteristic quantity for the divisional areas to be extracted as the analysis target region, based on the values of the image characteristic quantity of the divisional areas selected through the divisional area selector; and an area extractor for extracting, from the observed image, each divisional area having a value of the image characteristic quantity included in the aforementioned value range.

## Description

### TECHNICAL FIELD

The present invention relates to a system for setting an analysis target region within an observed sample image obtained with an observation optical system, such as an optical microscope.

### BACKGROUND ART

A microspectroscopy apparatus is a device which is provided with an observation optical system for microscopically observing a sample surface and an analyzing system for performing a spectroscopic analysis on a portion of interest within the observed area. For example, a microscopic infrared spectroscopic analyzer which performs an analysis using infrared light has: an illumination optical system acting as the aforementioned analyzing system for casting infrared light onto a sample; an aperture element having an opening (normally, a rectangular opening) for allowing the passage of only the light coming from a specific region which is of interest to the user (region of interest) among the light reflected by or transmitted through the sample illuminated with the infrared light; and an infrared detector for detecting the reflected or transmitted light which has passed through the opening. The microscopic infrared spectroscopic analyzer is hereinafter simply referred to as the "infrared microscope." In the infrared microscope, an image of the sample surface observed in visible light is obtained by the observation optical system. From this image observed in visible light, the position, size and orientation (angle) of the opening of the aperture element are specified so as to fit the opening into the region of interest. Subsequently, infrared light is cast from the illumination optical system. Then, among the reflected or transmitted light, the light which has passed through the opening is detected by the detector. Based on the thereby obtained infrared spectrum (the intensity distribution with respect to the wavelength), the region of interest is analyzed.

In such an infrared microscope, it is essential to accurately specify the position, size and orientation of the opening of the aperture element so as to give the opening the largest possible area within the region of interest while blocking the infrared light originating from outside the region of interest. In conventional infrared microscopes, for each observation, users are required to visually check the observed image and specify the position, size and orientation of the opening of the aperture element one by one with a mouse or similar pointing device. However, for example, if the region of interest has a complex shape, it is difficult to accurately specify those parameters so as to satisfy the aforementioned condition.

Meanwhile, in Patent Literature 1, an infrared microscope is described in which an area having characteristic image information (this area is hereinafter called the "characteristic image area") is extracted by performing an edge extraction, binarization or other processes on an observed image of a sample. In an analyzer which has such a system for extracting a characteristic image area from an observed image, when a user specifies an appropriate position within the observed image with a pointing device or the like, a certain area is extracted; for example, based on the brightness value at the specified position, an area having a predetermined range of brightness values around that brightness value is extracted (Patent Literature 2), or an area surrounded by an edge including the specified position is extracted.

In recent years, an infrared microscope which is further capable of automatically setting the position, size and orientation of the opening of the aperture element for the thus extracted characteristic image area by optimization or other calculations has been practically available. Those automating techniques enable users to quickly set the position, size and orientation of the opening of the aperture element.

### CITATION LIST

### PATENT LITERATURE

Patent Literature 1: JP 2010-276371 A
Patent Literature 2: JP 2007-127485 A

### SUMMARY OF INVENTION

### TECHNICAL PROBLEM

In a system which performs the previously described process to automatically extract, as the characteristic image area, the region which is of interest to the user within an observed image, the following problem occurs: For example, if the sample surface has three-dimensional projections or recesses, the shades which occur due to those projections or recesses may be incorrectly included in the characteristic image area if the previously described process is used. This results in the characteristic image area being extracted with a larger area than the region of interest.

Such an incorrect selection may possibly be avoided by adjusting a certain threshold (e.g. the aforementioned "predetermined range"). However, it conversely results in the characteristic image area being smaller than the region of interest, which automatically causes a corresponding reduction in the opening size of the aperture element and a consequent decrease in the S/N ratio of the analysis data.

The previously described problem is not limited to infrared microscopes but can generally occur in any type of analyzer which allows users to set a region to be analyzed (this region is hereinafter called the "analysis target region") within a sample image obtained by an observation of a sample and then performs an analysis on that analysis target region.

The problem to be solved by the present invention is to provide a system capable of quickly and accurately setting an analysis target region as intended by a user, based on an observed image of a sample obtained with an optical microscope or similar device, without requiring cumbersome tasks in the process of setting the analysis target region within that image.

### SOLUTION TO PROBLEM

The present invention aimed at solving the previously described problem is a system for setting, within an observed image of a sample, an analysis target region that is a region on which an analysis is to be performed by an analyzer, the system including:
a characteristic quantity calculator for dividing the observed image into a plurality of areas and for calculating a predetermined image characteristic quantity in each of the divisional areas;
a divisional area selector for allowing a user to select a plurality of the divisional areas;
a characteristic quantity range calculator for determining a value range of the image characteristic quantity for the divisional areas to be extracted as the analysis target region, based on the values of the image characteristic quantity of the divisional areas selected through the divisional area selector; and
an area extractor for extracting, from the observed image, each divisional area having a value of the image characteristic quantity within the aforementioned value range.

In the system for setting an analysis target region according to the present invention, the characteristic quantity calculator divides an observed image into a large number of areas (divisional areas) and obtains a predetermined image characteristic quantity (which is hereinafter shortened as the "characteristic quantity") for each divisional area. The divisional area in the present invention may consist of one pixel (i.e. the smallest unit of the observed image) or a set of neighboring pixels. As the characteristic quantity, for example, a pixel characteristic quantity or texture characteristic quantity can be used (both of which will be described later). The characteristic quantity used in the present invention may be a single kind of quantity or a combination of two or more of kinds of quantities. The characteristic quantity should be previously specified by users or system manufacturers.

One example of the operation of the system for setting an analysis target region according to the present invention is as follows: A user initially selects a portion of the region which the user desires to analyze (the region of interest) within an observed image by drawing a point, line, area or the like with a mouse or similar device (the divisional area selector). By this drawing operation, a plurality of divisional areas are determined (which are hereinafter called the "representative selected areas").

Based on the values of the characteristic quantity of the representative selected areas, the characteristic quantity range calculator determines the value range of the characteristic quantity for the divisional areas to be extracted as the target of the analysis. For example, this range for the characteristic quantity can be determined by statistically processing the values of the characteristic quantity of the representative selected areas and setting a range that includes most of those values (which may include all the values).

After the value range is thus determined, the area extractor checks every divisional area in the observed image for whether or not its characteristic quantity value is within that value range, and extracts each divisional area whose characteristic quantity value is within that range. The divisional areas thus extracted are designated as the analysis target region.

### ADVANTAGEOUS EFFECTS OF THE INVENTION

In the system for setting an analysis target region according to the present invention, an observed image of a sample is divided into a large number of divisional areas, from which users are allowed to select a plurality of divisional areas (representative selected areas). In this operation, only a partial and representative set of the divisional areas needs to be selected. Based on the characteristic quantity data of the representative selected areas, a value range to be set for the analysis target region is calculated. Each divisional area having a characteristic quantity value included in that range is extracted from the observed image and designated as the analysis target region. By this configuration, the analysis target region can be set more quickly and accurately (with neither any excess nor deficiency) than in the case of setting the region by using either an exclusive manual or automatic process.

### BRIEF DESCRIPTION OF DRAWINGS

Fig. 1 is a configuration diagram showing the main components of an infrared microscope as one embodiment of the present invention.
Fig. 2 is a flowchart showing the process of setting an analysis target region in the infrared microscope of the present embodiment.
Fig. 3 shows one example of the observed image displayed on the screen of a display unit.
Fig. 4 shows one example of the divisional areas defined for the observed image.
Fig. 5 shows a line specified by a user on the observed image.
Fig. 6 shows representative selected areas corresponding to the line specified by a user.
Figs. 7A and 7B each illustrate the brightness distribution of the representative selected areas and a value range to be set for that brightness distribution.
Fig. 8 shows an analysis target region which has been set on the observed image.
Fig. 9 shows another example of the observed image displayed on the screen of the display unit, with a line specified by a user on the observed image.
Fig. 10 illustrates the brightness distribution of the representative selected areas corresponding to the line specified by the user and a value range to be set for that brightness distribution.
Fig. 11 shows analysis target regions which have been set on the observed image.

### DESCRIPTION OF EMBODIMENTS

### EMBODIMENTS

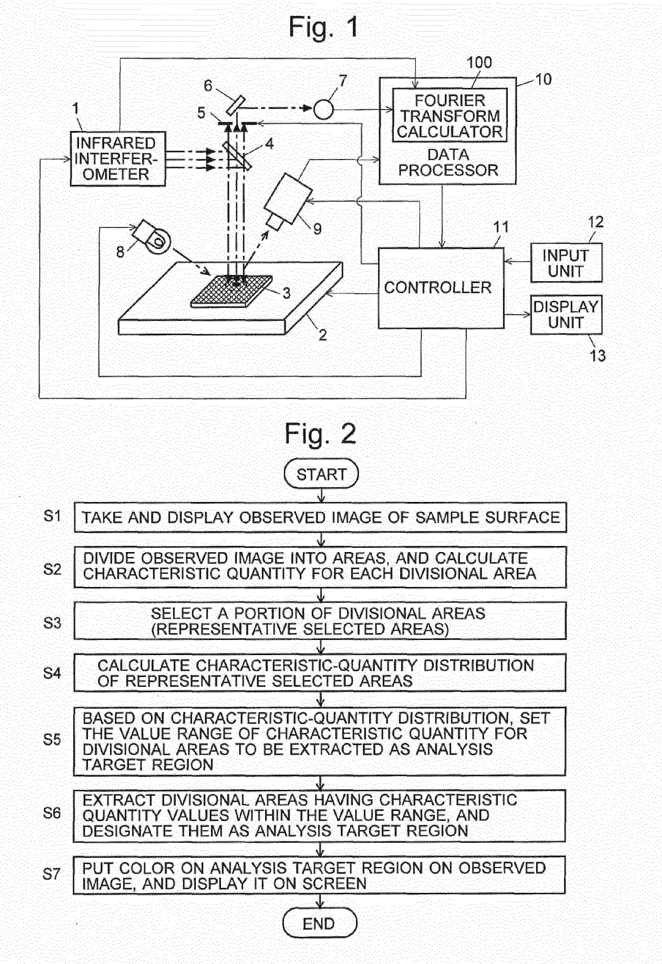

An infrared microscope as one embodiment of the present invention will be described with reference to the drawings. Fig. 1 is a configuration diagram showing the main components of the infrared microscope of the present embodiment.

In Fig. 1, an infrared interferometer 1 includes an infrared source, fixed mirror, movable mirror, beam splitter and other devices. It emits an infrared interference light produced by an interference of infrared rays having different wavelengths. The infrared interference light is reflected by a half mirror 4 and cast onto a sample 3 placed on a movable stage 2. When the infrared interference light cast onto the sample 3 is reflected by the surface, the light undergoes absorption at one or more wavelengths (normally, at multiple wavelengths) specific to the substances present on that location. The infrared light reflected from the sample 3 passes through the half mirror 4 and reaches the aperture element 5, which admits only the reflected light coming from a specific region. This light is redirected by a reflection mirror 6 to an infrared detector 7, which receives and detects the light. Therefore, the infrared interference light arriving at the infrared detector 7 is reflective of the infrared absorption which occurs at the specific region in the sample 3.

The detection signal produced by the infrared detector 7 is sent to a data processor 10. In the data processor 10, a Fourier transform calculator 100 performs a Fourier transform process on the detection signal to obtain an infrared absorption spectrum showing the absorbance over a predetermined range of wavelengths. The spectrum data thus obtained is sent to a controller 11 and displayed on the screen of a display unit 13 connected to the controller 11. Meanwhile, visible light is emitted from a visible light source 8 and illuminates a large area on the sample 3. The visible light reflected from the sample 3 is introduced into a CCD camera 9. In the CCD camera 9, an observed image of the surface of the sample 3 is formed, and the data of the observed image are sent to the controller 11. Similarly to the spectrum data, the observed image data sent to the controller 11 are also displayed on the screen of the display unit 13. The area to be illuminated with the infrared interference light can be changed by appropriately operating the movable stage 2 and aperture element 5 under the command of the controller 11. The controller 11 also controls the operations of the infrared interferometer 1, visible light source 8 and other components.

The data processor 10 and controller 11 can be configured to achieve various functions (which will be described later) by executing, on a personal computer, a dedicated controlling and data-processing software program previously installed on the computer.

The system shown in Fig. 1 is configured to perform a reflective infrared measurement and reflective visible observation. The configuration may be changed so as to perform a transmissive infrared measurement and/or transmissive visible observation. It is also possible to include a mechanism for allowing users to visually and directly observe the sample surface through an eyepiece.

The process of setting an analysis target region from an observed image of a sample in the infrared microscope of the present embodiment is hereinafter described by means of the flowchart of Fig. 2.

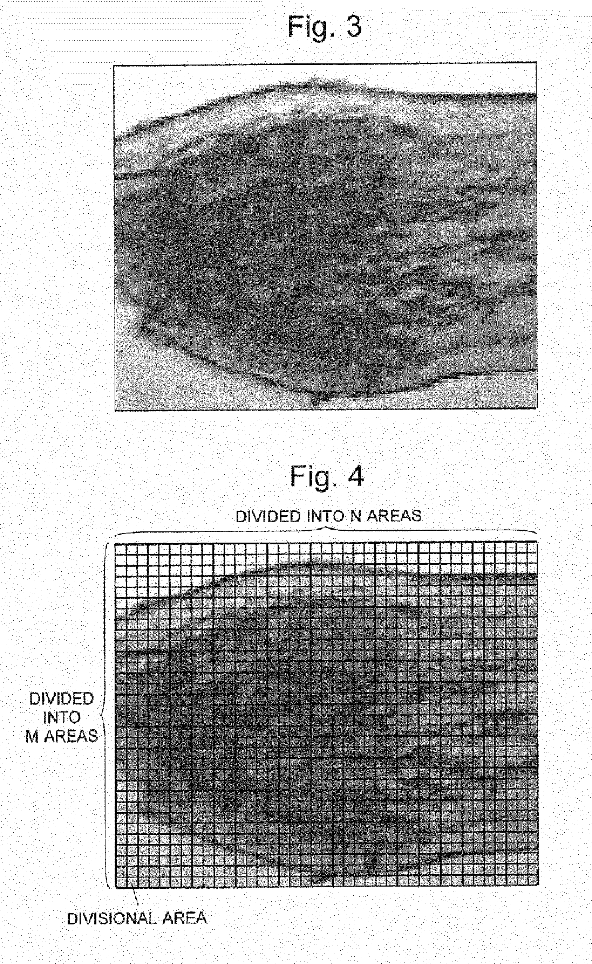

After a sample 3 as a measurement target is placed on the movable stage 2, a visible image of the sample 3 is taken with the CCD camera 9. The obtained image data are sent to the controller 11, and the observed image as shown in Fig. 3 is displayed on the screen of the display unit 13 (Step S1). Furthermore, the controller 11 divides this observed image into a plurality of areas as shown in Fig. 4 (in the shown example, M×N areas) and calculates a characteristic quantity for each divisional area (Step S2). Each divisional area may consist of a single pixel or a set of neighboring pixels.

As for the herein calculated characteristic quantity, a pixel characteristic quantity or texture characteristic quantity can be used. The pixel characteristic quantity is the image information possessed by each individual pixel, such as the brightness, hue and saturation. The texture characteristic quantity is a numerical representation of texture components, such as a point, line and roughness. This can be calculated, for example, using a local histogram (a histogram covering the region of interest and the surrounding area) or a histogram of an image in which edges are extracted by means of a second-order Sobel filter or the like. Since the texture characteristic quantity normally contains a large amount of information, its number of dimensions may be appropriately decreased by a principal component analysis or similar technique in order to increase the processing speed. Other than these examples, any characteristic quantity commonly used in the image processing can be used.

The characteristic quantity data calculated for each divisional area in Step S2 are stored in a storage unit (not shown).

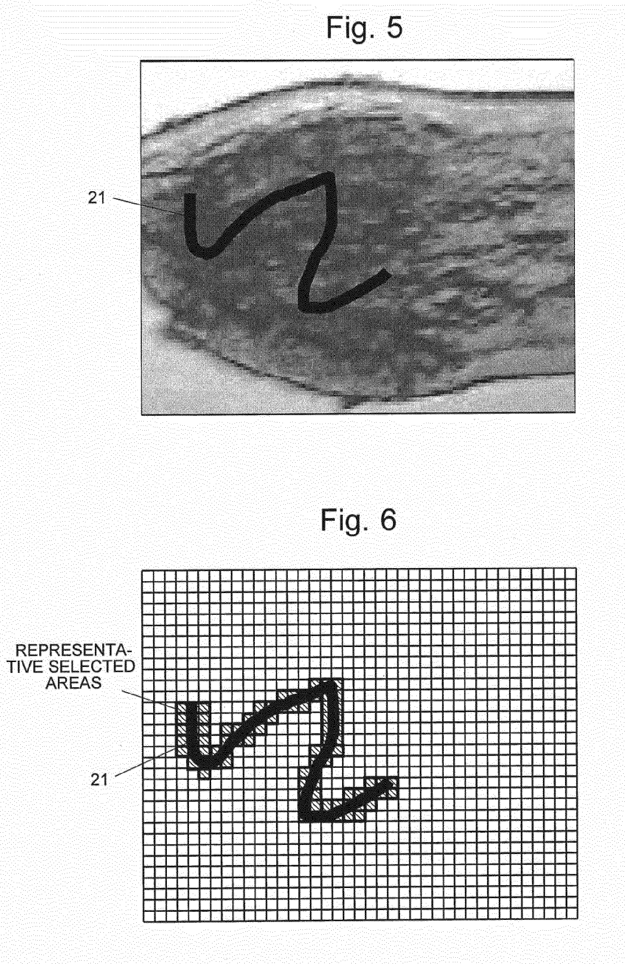

Using the input unit 12 (e.g. a mouse) connected to the controller 11, the user selects a partial and representative set of divisional areas (representative selected areas) within the observed image displayed on the screen of the display unit 13 (Step S3). Fig. 5 shows an example of the observed image on which the user has selected the representative selected areas by drawing the line 21. In response to such a drawing operation by the user, the controller 11 selects all the divisional areas including the line 21 as the representative selected areas (Fig. 6).

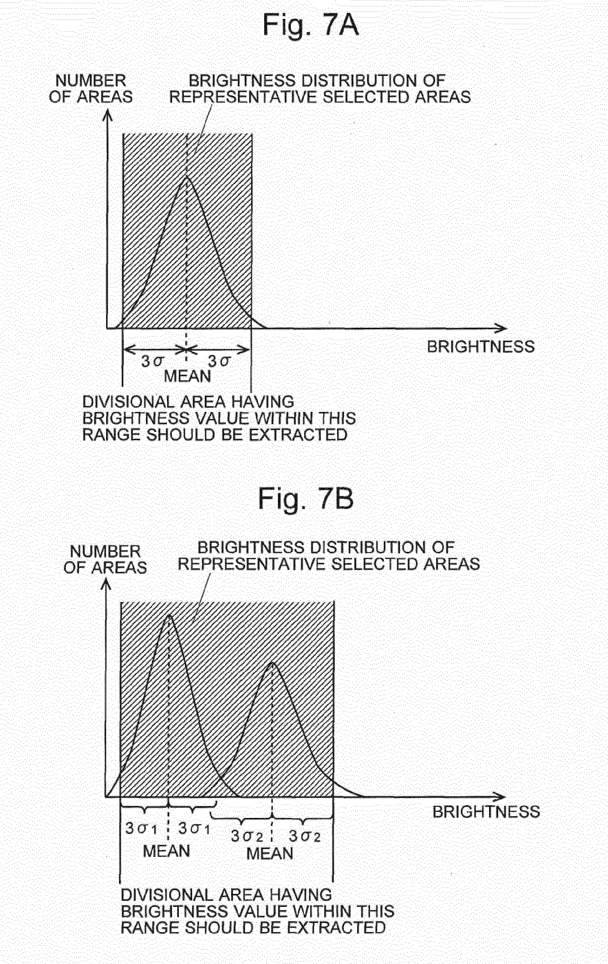

The controller 11 reads, from the storage unit, the values of the characteristic quantity of the representative selected areas specified by the user, and calculates their distribution (Step S4; Figs. 7A and 7B). For ease of explanation, Figs. 7A and 7B each show one-dimensional distribution of the representative selected areas with only the brightness value used as the characteristic quantity (brightness distribution).

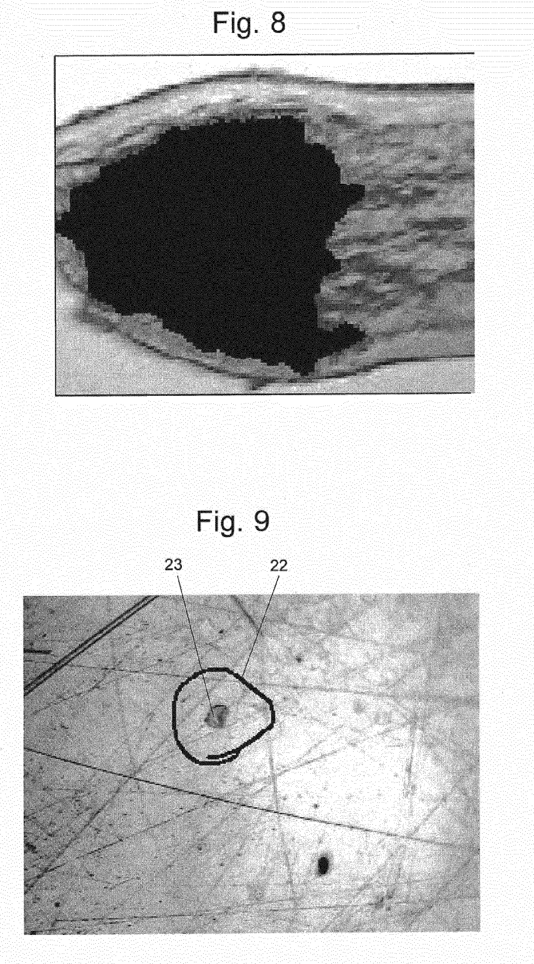

In Step S5, a value range of the characteristic quantity for the divisional areas to be extracted as the measurement target region is determined for the distribution calculated in Step S4. In Fig. 7A, the mean value and standard deviation σ of the brightness distribution are calculated, and the range of ±3σ from the mean value is defined as the value range of the brightness to be extracted as the measurement target region. If a multi-peak distribution having two or more peaks as shown in Fig. 7B is obtained in Step S4, it is possible to divide the distribution into k sections (in the case of Fig. 7B, two sections) by k-means clustering or other techniques, and to calculate the value range of the brightness for each section by the previously described method. In Step S6, the characteristic quantity values of all the divisional areas are read from the storage unit, and each divisional area is checked for whether or not its characteristic quantity value is within the range calculated in Step S5. Then, every divisional area having a characteristic quantity value included in that range is extracted and designated as the analysis target region. After the analysis target region is thus designated, the controller 11 puts a specific color on the analysis target region in the observed image displayed on the screen of the display unit 13 (Step S7; Fig. 8). The user visually checks the image of Fig. 8 and completes the process if the analysis target region is set as intended. If the analysis target region is not set as intended, the user should appropriately increase or decrease the range of the representative selected areas. If the process in Step S7 results in the extraction of a plurality of mutually independent areas, all of those areas may be displayed on the screen. Alternatively, for example, a single area (i.e. an area which is not internally separated) including the representative selected areas specified by the user may be exclusively displayed.

Thus, the process related to the setting of the analysis target region is completed. Subsequently, for the analysis target region obtained by the previously described process, the controller 11 adjusts the opening size of the aperture element 5 and the position of the sample 3 placed on the movable stage 2, after which the infrared interference light is cast from the infrared interferometer to perform an analysis of the analysis target region.

In the previous embodiment, the value range calculated in Step S5 is defined as ±3σ from the mean value of the brightness distribution. Naturally, it is possible to allow users to appropriately set this range based on the distribution calculated in Step S4.

In the previous description, the user sets the representative selected areas within the region which is of interest to the user to extract the analysis target region. There is a different method for extracting the analysis target region. Specifically, this method is the opposite of the previously described method; it includes temporarily setting representative selected areas within an area "other than" the region of interest and extracting, as the analysis target region, a region "exclusive of" the representative selected areas. This method is hereinafter described with reference to Figs. 9-11.

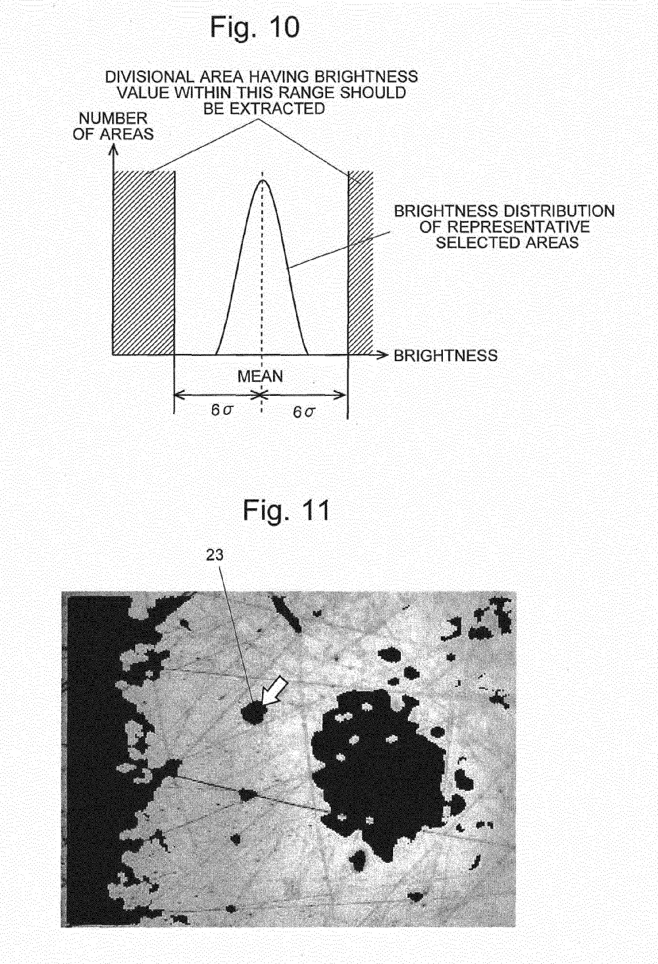

In the observed image of Fig. 9, the lump 23 is the region of interest to the user. On this observed image, the user temporarily sets the representative selected areas by drawing a line 22 within an area "other than" the region of interest (lump) 23 (Step S3). The consequently obtained characteristic quantity distribution (brightness distribution) is shown in Fig. 10 (Step S4). The brightness distribution of the representative selected areas in Fig. 10 does not include the brightness distribution within the region of interest 23. Therefore, in Step S5, the value range for the divisional areas to be extracted as the analysis target region is set in the opposite way, i.e. in such a manner as to "exclude" the brightness distribution of the representative selected areas (in the example of Fig. 10, the ranges outside ±6σ from the mean value). As a result, in Step S6, the divisional areas included in the aforementioned ranges exclusive of the representative selected areas are designated as the analysis target region. Fig. 11 shows analysis target regions designated in the observed image by the present method. In Fig. 11, not only the region of interest 23 but also many other areas are designated and colored as the analysis target regions. In such a case, the user selects the region of interest 23 by a mouse click or similar operation, whereupon the controller 11 automatically sets the position and size of the opening of the aperture element 5 to fit the opening into the clicked region. As shown in Fig. 10, if the line 22 is a closed curve and an extracted region exists inside that curve, it is possible to automatically designate the region inside the closed curve as the analysis target region, and automatically set the position and size of the opening of the aperture element 5 to fit the opening into that region.

Although only an infrared microscope is described in the previous embodiment, the present invention can be applied in various analyzers other than the infrared microscope, such as a microspectroscopy apparatus or imaging mass microscope.

### REFERENCE SIGNS LIST

- 1: Infrared Interferometer
- 2: Movable Stage
- 3: Sample
- 4: Half Mirror
- 5: Aperture Element
- 6: Reflection Mirror
- 7: Infrared Detector
- 8: Visible Light Source
- 9: CCD Camera
- 10: Data Processor
100 Fourier Transform Calculator
- 11: Controller
- 12: Input Unit
- 13: Display Unit
- 21, 22: Line
- 23: Region of Interest (Lump)

## Claims

1. A system for setting, within an observed image of a sample, an analysis target region that is a region on which an analysis is to be performed by an analyzer, the system comprising:
a characteristic quantity calculator for dividing the observed image into a plurality of areas and for calculating a predetermined image characteristic quantity in each of the divisional areas;
a divisional area selector for allowing a user to select a plurality of the divisional areas;
a characteristic quantity range calculator for determining a value range of the image characteristic quantity for the divisional areas to be extracted as the analysis target region, based on the values of the image characteristic quantity of the divisional areas selected through the divisional area selector; and
an area extractor for extracting, from the observed image, each divisional area having a value of the image characteristic quantity within the aforementioned value range.

2. The system for setting an analysis target region according to claim 1, wherein the value range is set so that the values of the image characteristic quantity of the divisional areas selected by the user are entirely or partially included in the value range.

3. The system for setting an analysis target region according to claim 1, wherein the value range is set so that none of the values of the image characteristic quantity of the divisional areas selected by the user is included in the value range.
